# FASCICULE DE BREVET EUROPEEN

(11) **EP 3 084 199 B1**
(45) Date de publication et mention de la délivrance du brevet: **10.01.2018**
(21) Numéro de dépôt: 14827820.3
(22) Date de dépôt: 11.12.2014
(51) Int. Cl.: F02M 35/10, F02M 35/108, F02B 31/08, F02B 33/44, F02B 39/10

(54) **SYSTEME D'ADMISSION D'AIR POUR MOTEUR THERMIQUE**
LUFTVERSORGUNGSSYSTEM FÜR BRENNKRAFTMASCHINE
AIR INTAKE SYSTEM FOR COMBUSTION ENGINE

(30) Priorité: 19.12.2013 FR 1363081
(43) Date de publication de la demande: 26.10.2016
(73) Titulaire: Valeo Systèmes de Contrôle Moteur, 95800 Cergy Saint Christophe (FR)
(72) Inventeur: MARCINKOWSKI, Julien, F-78500 Sartrouville (FR); ZAKRZEWSKI, Piotr, F-78260 Acheres (FR); DAVID, Florent, F-92150 Suresnes (FR)
(74) Mandataire: Garcia, Christine
(86) Numéro de dépôt international: PCT/FR2014/053273
(87) Numéro de publication internationale: WO 2015/092226

(56) Documents cités:
- EP-A1- 1 705 364
- EP-A2- 1 801 382
- WO-A1-02/10577
- FR-A3- 2 921 697

## Description

La présente invention concerne le domaine des systèmes d'admission d'air d'un moteur thermique, et plus particulièrement un ensemble pour moteur thermique de véhicule automobile comprenant un système d'admission d'air et un compresseur électrique configurés pour améliorer l'aérodynamique interne du moteur.

Les moteurs thermiques concernés par la présente invention sont des moteurs essence, Diesel, gaz, éthanol, suralimentés ou pas.

L'aérodynamique interne des moteurs à pistons conditionne pour une grande part la qualité de la combustion et, ainsi la consommation de carburant et les émissions polluantes. Maîtriser et faire varier cette aérodynamique en fonction des conditions de fonctionnement, est donc un enjeu majeur pour respecter des normes d'émissions et de consommation toujours plus serrées.

Parmi les moyens connus pour faire varier l'aérodynamique interne d'un moteur, on peut citer les systèmes d'admission comportant dans certains cas une vanne de type papillon étouffoir et des volets d'écoulement de tourbillons radiaux (également appelé swirl selon la terminologie anglaise) et/ou d'écoulement de tourbillons transversaux (également appelé tumble selon la terminologie anglaise) qui consistent à occulter tout ou partie d'un conduit. Sur certains moteurs Diesel à deux soupapes d'admission par cylindre, une soupape est alimentée par un conduit de remplissage et l'autre par un conduit de type swirl. En occultant plus ou moins, par exemple par un volet, le conduit remplissage, on peut faire varier le taux de swirl. Classiquement, le répartiteur d'admission a une seule entrée et autant de sorties que de cylindres, la séparation entre les conduits de remplissage et swirl intervenant dans la culasse pour chaque cylindre. En conséquence, il faut autant de volets swirl que de cylindres. Afin de n'utiliser qu'un seul volet swirl, il est également possible d'utiliser un double répartiteur d'admission. Ce dernier commence par un conduit en forme de Y qui débouche sur deux répartiteurs indépendants, l'un alimentant toutes les soupapes swirl et l'autre toutes les soupapes remplissage.

Les normes à venir d'homologation des véhicules en matière de consommation et d'émissions polluantes étant réalisées sur des roulages beaucoup plus dynamiques et avec des charges plus élevées, il existe un besoin accru non seulement de faire varier très rapidement l'aérodynamique mais aussi sur une zone étendue de fonctionnement moteur. Le document EP1801382A2 décrit un ensemble pour moteur thermique comportant un système d'admission d'air, le système d'admission d'air comportant un double répartiteur à l'entrée duquel est disposée une vanne configurée pour permettre la circulation des gaz d'admission dans le premier et/ou le deuxième répartiteur par les gaz d'admission. La vanne sert à une double fonction pour commander à la fois le débit d'air d'admission et l'intensité de tourbillonnement.

Le contournement d'un compresseur électrique et sa régulation par une vanne est connu en soi du document WO02/10577A1.

L'inconvénient des moyens déjà connus est qu'ils ne permettent pas de faire varier suffisamment rapidement l'aérodynamique sur les charges élevées dont la dynamique est très souvent limitée par le temps de réponse du turbo-compresseur, et/ou qu'ils dégradent la consommation en introduisant des pertes de charge supplémentaires.

La présente invention a donc pour objet de pallier les inconvénients des systèmes de l'art antérieur en proposant un ensemble pour moteur thermique comprenant un système d'admission d'air permettant de faire varier très rapidement l'aérodynamique interne d'un moteur à combustion sans dégrader la consommation.

Pour cela la présente invention propose un ensemble pour moteur thermique comportant un compresseur électrique et un système d'admission d'air, le système d'admission d'air comportant un double répartiteur à l'entrée duquel est disposée une vanne configurée pour permettre la circulation des gaz d'admission dans le répartiteur et/ou le contournement du compresseur électrique par les gaz d'admission.

Selon un mode de réalisation de l'invention, le double répartiteur comporte un répartiteur de tourbillonnement et un répartiteur de remplissage, alimentés par deux entrées indépendantes, pouvant être obturés indépendamment l'un de l'autre par la vanne.

Selon un mode de réalisation de l'invention, l'ensemble pour moteur thermique selon l'invention, comporte un conduit de contournement du compresseur électrique disposé de façon à pouvoir être obturé par la vanne lorsque le compresseur électrique est activé.

Selon un mode de réalisation de l'invention, le conduit d'admission principal d'air du moteur se sépare en un premier conduit et un conduit de contournement indépendants et débouchant dans la vanne.

Selon un mode de réalisation de l'invention, le compresseur électrique est disposé sur le premier conduit en amont de la vanne.

Selon un mode de réalisation de l'invention, le premier conduit est disposé de façon à ce qu'avec une position de vanne donnée, il puisse être le seul conduit en communication avec les conduits de remplissage et de tourbillonnement des répartiteurs.

La présente invention concerne également un procédé d'utilisation d'un ensemble selon l'invention, comprenant les étapes suivantes :
- non activation du compresseur électrique,
- contournement du compresseur électrique par circulation des gaz dans le conduit de contournement,
- alimentation du conduit de swirl.

La présente invention concerne également un procédé d'utilisation d'un ensemble selon l'invention, comprenant les étapes suivantes :
- non activation du compresseur électrique,
- contournement du compresseur électrique par circulation des gaz dans le conduit de contournement,
- alimentation du conduit de swirl et du conduit de répartition.

La présente invention concerne également un procédé d'utilisation d'un ensemble selon l'invention, comprenant les étapes suivantes :
- activation du compresseur électrique,
- circulation des gaz dans le premier conduit d'admission, via le compresseur électrique,
- alimentation du conduit de swirl et du conduit de répartition.

La présente invention concerne également un procédé d'utilisation d'un ensemble selon l'invention, pour empêcher toute circulation de fluide dans un double répartiteur.

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la figure 1 est une représentation schématique et partielle d'une architecture moteur impliquant un compresseur électrique et un système d'admission d'air selon l'invention, selon une première configuration d'utilisation,
- la figure 2 est une représentation schématique et partielle d'une architecture moteur impliquant un compresseur électrique et un système d'admission d'air selon l'invention, selon une deuxième configuration d'utilisation,
- la figure 3 est une représentation schématique et partielle d'une architecture moteur impliquant un compresseur électrique et un système d'admission d'air selon l'invention, selon une troisième configuration d'utilisation,
- la figure 4 est une représentation schématique et partielle d'une architecture moteur impliquant un compresseur électrique et un système d'admission d'air selon l'invention, selon une quatrième configuration d'utilisation.

La présente invention se rapporte à un ensemble comportant un système d'admission d'air et un compresseur électrique pour un moteur thermique.

La présente invention concerne l'ensemble des moteurs thermiques essence, Diesel, gaz, éthanol, qu'ils soient suralimentés ou pas.

Dans la suite de la description, on entend par compresseur électrique, un compresseur d'air, volumétrique ou non et par exemple centrifuge ou radial, entraîné par un moteur électrique, dans le but de suralimenter un moteur thermique. Le compresseur électrique est donc généralement activé pour augmenter la masse volumique de l'air admis. Dans le cadre de l'invention, le compresseur électrique est associé à un circuit de dérivation (également appelé by-pass selon la terminologie anglaise) permettant de le contourner lorsque cela est nécessaire, comme décrit plus loin.

Le système d'admission utilisé dans le cadre de l'invention comporte un double répartiteur d'admission avec deux entrées indépendantes.

L'invention consiste à utiliser une vanne, en entrée du répartiteur, permettant de réaliser les fonctions d'une vanne papillon étouffoir, de volet aérodynamique et de contournement (by-pass) du compresseur électrique, cette vanne étant associée au compresseur électrique.

Une telle vanne selon l'invention permet de limiter l'encombrement du moteur et les coûts associés. Cette vanne permet également de choisir d'utiliser un ou deux répartiteurs du double répartiteur, ou de ne pas utiliser de répartiteur suivant les conditions et les charges du moteur, avec une utilisation optionnelle du compresseur électrique.

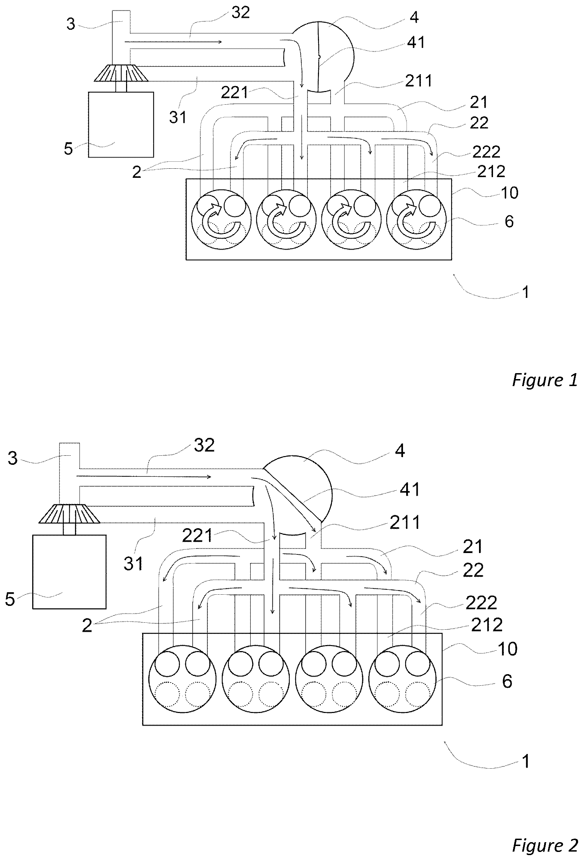

Un exemple d'architecture moteur impliquant un ensemble selon l'invention est illustré sur les figures 1 à 4. Les flèches, sur les figures, illustrent la circulation de l'air d'admission également appelé gaz d'admission.

L'ensemble 1 comporte un double répartiteur d'admission 2 comportant un répartiteur de remplissage 21 et un répartiteur de swirl 22. Ce double répartiteur 2 est disposé sur le conduit d'admission 3 d'air du moteur 10. Le double répartiteur 2 comporte deux conduits 211, 221 d'entrée indépendants, au niveau desquels est disposée la vanne 4 faisant partie de l'ensemble selon l'invention. Un premier conduit de remplissage 211 débouche dans le répartiteur de remplissage 21, et un deuxième conduit de swirl 221 débouche dans le répartiteur de swirl 22. On entend donc par conduit de remplissage le conduit qui alimente le répartiteur de remplissage et par conduit de swirl le conduit qui alimente le répartiteur de swirl. Le conduit de swirl 221 et le conduit de remplissage 211 peuvent être totalement ou partiellement obturés indépendamment l'un de l'autre.

Selon un mode de réalisation de l'invention, chacun des répartiteurs comporte quatre sous-conduits 212, 222 alimentant quatre cylindres 6.

L'ensemble selon l'invention comporte également un compresseur électrique 5 disposé en amont de la vanne 4, par rapport au double répartiteur 2, sur le conduit d'admission principal 3 d'air du moteur.

Le conduit d'admission principal 3 d'air du moteur se sépare en un premier conduit 31 et un deuxième conduit appelé conduit de contournement 32 indépendants, les deux conduits débouchant dans la vanne 4.

Le compresseur électrique 5 est disposé sur un des ces conduits, plus précisément, il est disposé sur le premier conduit 31.

Le premier conduit 31 débouche dans le corps de la vanne 4 à proximité des deux conduits du répartiteur.

Plus précisément, selon un mode de réalisation de l'invention, ce premier conduit 31 est disposé de façon à ce que avec une position de vanne 4 donnée, il puisse être le seul conduit en communication avec les conduits de remplissage 211 et de swirl 221 des répartiteurs.

Le conduit de contournement 32 sert, comme son nom l'indique, de conduit de contournement du compresseur électrique 5 lorsque ce dernier n'est pas utilisé.

La vanne 4 utilisée dans le cadre de l'invention, comporte un moyen d'obturation 41 permettant d'obturer zéro, un ou les deux conduits 31, 32 du conduit d'admission principal 3.

Selon un mode de réalisation de l'invention, le moyen d'obturation est un volet fixé à la vanne par son centre et pouvant pivoter axialement.

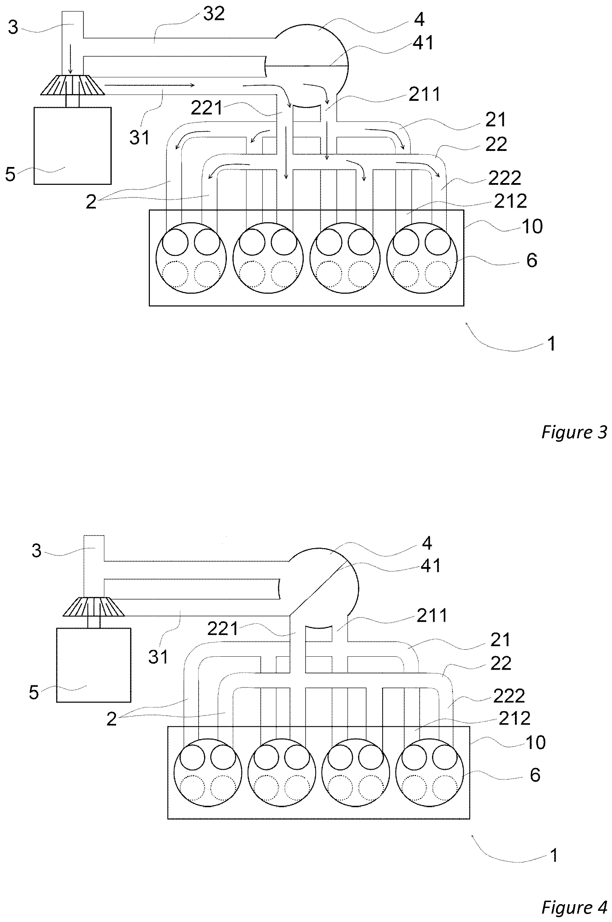

Selon un mode de réalisation de l'invention, la vanne 4 est configurée de façon à permettre plusieurs modes de fonctionnement du système selon l'invention :
- Mettre en communication les deux conduits 31, 32 du conduit d'admission principal 3 et le conduit de swirl 221. Le compresseur électrique est alors contourné et tout le débit d'air pénètre dans le cylindre par le conduit de swirl 221. Cette configuration est représentée sur la figure 1.
- Mettre en communication les deux conduits 31, 32 du conduit d'admission principal 3 et les deux conduits de swirl 221 et remplissage 211. Le compresseur électrique est alors contourné et le débit d'air se répartit entre les conduits swirl 221 et remplissage 211. Cette configuration est représentée sur la figure 2.
- Mettre en communication le premier conduit 31 du conduit d'admission principal 3 et les deux conduits de swirl 221 et remplissage 211. Le compresseur électrique peut alors comprimer l'air d'admission qui se répartit entre conduits swirl 221 et remplissage 211. Cette configuration est représentée sur la figure 3.
- Obturer les conduits swirl 221 et remplissage 211 de façon à étouffer le moteur pour l'arrêter

Selon un autre mode de réalisation de l'invention, la vanne 4 est configurée de façon à mettre en communication le premier conduit 31 du conduit d'admission principal 3 et un seul des deux conduits 211, 221 du double répartiteur 2.

Selon un autre mode de réalisation de l'invention, la vanne 4 est configurée de façon à mettre en communication un seul des deux conduits 211, 221 du double répartiteur 2 et le deuxième conduit ou conduit de contournement 32 du conduit d'admission principal 3, contournant ainsi le compresseur électrique 5.

En se référant à la figure 1, un premier mode de réalisation préféré d'un procédé d'utilisation d'un ensemble selon l'invention comprend les étapes suivantes :
- non activation du compresseur électrique 5,
- contournement du compresseur électrique 5 par circulation des gaz dans le conduit de contournement 32,
- alimentation du conduit de swirl 221.

Ce procédé qui consiste à court-circuiter le compresseur électrique 5 et à alimenter le conduit de swirl 221, est utilisé essentiellement pour les faibles charges.

En se référant à la figure 2, un deuxième mode de réalisation préféré d'un procédé d'utilisation d'un ensemble selon l'invention comprend les étapes suivantes :
- non activation du compresseur électrique 5,
- contournement du compresseur électrique 5 par circulation des gaz dans le conduit de contournement 32,
- alimentation du conduit de swirl 221 et du conduit de répartition 211.

Ce procédé qui consiste à court-circuiter le compresseur électrique 5 et à alimenter le conduit de swirl 221 et le conduit de remplissage 211, est utilisé essentiellement pour les moyennes et fortes charges.

En se référant à la figure 3, un deuxième mode de réalisation préféré d'un procédé d'utilisation d'un ensemble selon l'invention comprend les étapes suivantes :
- activation du compresseur électrique 5,
- circulation des gaz dans le premier 31 conduit d'admission, via le compresseur électrique 5,
- alimentation du conduit de swirl 221 et du conduit de répartition 211.

Ce procédé qui consiste à alimenter le conduit de swirl 221 et le conduit de remplissage 211 via le compresseur électrique 5, est utilisé essentiellement pour les fortes demandes de charges dans les phases transitoires.

En se référant à la figure 4, un deuxième mode de réalisation préféré d'un procédé d'utilisation d'un ensemble selon l'invention consiste à ne pas alimenter le conduit de swirl 221 et le conduit de répartition 211 en utilisant la vanne comme un papillon étouffoir.

La vanne permet ainsi d'arrêter le moteur, notamment dans le cadre d'un moteur Diesel où les normes de sécurité impose un papillon étouffoir pour éviter que le moteur continue à tourner avec autre chose que le carburant injecté, comme par exemple de l'huile issue d'une fuite.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Ensemble (1) pour moteur thermique (10) comportant un compresseur électrique (5) et un système d'admission d'air, le système d'admission d'air comportant un double répartiteur (2) à l'entrée duquel est disposée une vanne (4) configurée pour permettre la circulation des gaz d'admission dans le répartiteur (2) et/ou le contournement du compresseur électrique (5) par les gaz d'admission.

2. Ensemble (1) pour moteur thermique (10) selon la revendication 1, dans lequel le double répartiteur (2) comporte un répartiteur de tourbillonnement (22) et un répartiteur de remplissage (21), alimentés par deux entrées indépendantes, pouvant être obturés indépendamment l'un de l'autre par la vanne (4).

3. Ensemble (1) pour moteur thermique (10) selon une des revendications 1 ou 2, comportant un conduit de contournement (32) du compresseur électrique (5) disposé de façon à pouvoir être obturé par la vanne (4) lorsque le compresseur électrique (5) est activé.

4. Ensemble (1) pour moteur thermique (10) selon une des revendications 1 à 3, dans lequel le conduit d'admission principal (3) d'air du moteur se sépare en un premier conduit (31) et un conduit de contournement (32) indépendants et débouchant dans la vanne (4).

5. Ensemble (1) pour moteur thermique (10) selon la revendication 4, dans lequel le compresseur électrique (5) est disposé sur le premier conduit (31) en amont de la vanne.

6. Ensemble (1) pour moteur thermique (10) selon une des revendications 4 à 5, dans lequel le premier conduit (31) est disposé de façon à ce qu'avec une position de vanne (4) donnée, il puisse être le seul conduit en communication avec les conduits de remplissage (211) et de tourbillonnement (221) des répartiteurs.

7. Procédé d'utilisation d'un ensemble (1) selon une des revendications 1 à 6, comprenant les étapes suivantes :
- non activation du compresseur électrique (5),
- contournement du compresseur électrique (5) par circulation des gaz dans le conduit de contournement (32),
- alimentation du conduit de swirl (221).

8. Procédé d'utilisation d'un ensemble (1) selon une des revendications 1 à 6, comprenant les étapes suivantes :
- non activation du compresseur électrique (5),
- contournement du compresseur électrique (5) par circulation des gaz dans le conduit de contournement (32),
- alimentation du conduit de swirl (221) et du conduit de répartition (211).

9. Procédé d'utilisation d'un ensemble (1) selon une des revendications 1 à 6, comprenant les étapes suivantes :
- activation du compresseur électrique (5),
- circulation des gaz dans le premier (31) conduit d'admission, via le compresseur électrique (5),
- alimentation du conduit de swirl (221) et du conduit de répartition (211).

10. Procédé d'utilisation d'un ensemble (1) selon une des revendications 1 à 6, pour empêcher toute circulation de fluide dans un double répartiteur (2).

## Patentansprüche

1. Anordnung (1) für Brennkraftmaschine (10), die einen elektrischen Kompressor (5) und ein Lufteinlasssystem umfasst, wobei das Lufteinlasssystem einen Doppelverteiler (2) umfasst, an dessen Eingang ein Ventil (4) angeordnet ist, das konfiguriert ist, die Strömung der Einlassgase in den Verteiler (2) und/oder die Umgehung des elektrischen Kompressors (5) durch die Einlassgase zu ermöglichen.

2. Anordnung (1) für Brennkraftmaschine (10) nach Anspruch 1, wobei der Doppelverteiler (2) einen Verwirbelungsverteiler (22) und einen Ladeverteiler (21) umfasst, die durch zwei unabhängige Eingänge gespeist werden, die durch das Ventil (4) unabhängig voneinander verschlossen werden können.

3. Anordnung (1) für Brennkraftmaschine (10) nach einem der Ansprüche 1 oder 2, die eine Leitung (32) für die Umgehung des elektrischen Kompressors (5) umfasst, die so angeordnet ist, dass sie durch das Ventil (4) verschlossen werden kann, wenn der elektrische Kompressor (5) aktiviert ist.

4. Anordnung (1) für Brennkraftmaschine (10) nach einem der Ansprüche 1 bis 3, wobei sich die Haupt-Lufteinlassleitung (3) der Maschine in eine erste Leitung (31) und in eine Umgehungsleitung (32) aufteilt, die unabhängig sind und in das Ventil (4) münden.

5. Anordnung (1) für Brennkraftmaschine (10) nach Anspruch 4, wobei der elektrische Kompressor (5) in der ersten Leitung (31) stromaufseitig des Ventils angeordnet ist.

6. Anordnung (1) für Brennkraftmaschine (10) nach einem der Ansprüche 4 bis 5, wobei die erste Leitung (31) so angeordnet ist, dass sie bei einer gegebenen Position des Ventils (4) die einzige Leitung sein kann, die mit der Ladeleitung (211) und mit der Verwirbelungsleitung (221) der Verteiler in Kommunikation ist.

7. Verfahren zum Verwenden einer Anordnung (1) nach einem der Ansprüche 1 bis 6, das die folgenden Schritte umfasst:
- Nichtaktivieren des elektrischen Kompressors (5),
- Umgehen des elektrischen Kompressors (5) durch Bewirken einer Strömung der Gase in die Umgehungsleitung (32),
- Speisen der Wirbelleitung (221).

8. Verfahren zum Verwenden einer Anordnung (1) nach einem der Ansprüche 1 bis 6, das die folgenden Schritte umfasst:
- Nichtaktivieren des elektrischen Kompressors (5),
- Umgehen des elektrischen Kompressors (5) durch Bewirken einer Strömung der Gase in der Umgehungsleitung (32),
- Speisen der Wirbelleitung (221) und der Verteilungsleitung (211).

9. Verfahren zum Verwenden einer Anordnung (1) nach einem der Ansprüche 1 bis 6, das die folgenden Schritte umfasst:
- Aktivieren des elektrischen Kompressors (5),
- Bewirken einer Strömung der Gase in die erste Einlassleitung (31) über den elektrischen Kompressor (5),
- Speisen der Wirbelleitung (221) und der Verteilungsleitung (211).

10. Verfahren zum Verwenden einer Anordnung (1) nach einem der Ansprüche 1 bis 6, um jegliche Fluidströmung in einem Doppelverteiler (2) zu verhindern.

## Claims

1. Assembly (1) for a combustion engine (10) comprising an electric compressor (5) and an air intake system, the air intake system comprising a double manifold (2) at the inlet of which there is arranged a valve (4) configured to allow the intake gases to circulate in the manifold (2) and/or to allow the intake gases to bypass the electric compressor (5).

2. Assembly (1) for a combustion engine (10) according to Claim 1, in which the double manifold (2) comprises a swirl manifold (22) and a filler manifold (21) which are fed by two independent inlets and which can be closed off independently of one another by the valve (4).

3. Assembly (1) for a combustion engine (10) according to either of Claims 1 and 2, comprising a pipe (32) for bypassing the electric compressor (5) that is arranged so as to be able to be closed off by the valve (4) when the electric compressor (5) is activated.

4. Assembly (1) for a combustion engine (10) according to one of Claims 1 to 3, in which the main air intake pipe (3) of the engine separates into a first pipe (31) and a bypass pipe (32) which are independent and open into the valve (4).

5. Assembly (1) for a combustion engine (10) according to Claim 4, in which the electric compressor (5) is arranged on the first pipe (31) upstream of the valve.

6. Assembly (1) for a combustion engine (10) according to either of Claims 4 and 5, in which the first pipe (31) is arranged in such a way that, with a given position of the valve (4), it can be the only pipe in communication with the filler pipe (211) and swirl pipe (221) of the manifolds.

7. Method of using an assembly (1) according to one of Claims 1 to 6, comprising the following steps:
- non-activation of the electric compressor (5),
- bypassing the electric compressor (5) by circulating the gases in the bypass pipe (32),
- feeding the swirl pipe (221).

8. Method of using an assembly (1) according to one of Claims 1 to 6, comprising the following steps:
- non-activation of the electric compressor (5),
- bypassing the electric compressor (5) by circulating the gases in the bypass pipe (32),
- feeding the swirl pipe (221) and the manifold pipe (211).

9. Method of using an assembly (1) according to one of Claims 1 to 6, comprising the following steps:
- activation of the electric compressor (5),
- circulating the gases in the first intake pipe (31), via the electric compressor (5),
- feeding the swirl pipe (221) and the manifold pipe (211).

10. Method of using an assembly (1) according to one of Claims 1 to 6 in order to prevent any circulation of fluid in a double manifold (2).
